(19) **Europäisches Patentamt**
**European Patent Office**
**Office européen des brevets**

(11) **EP 3 023 933 A1**

(12) **EUROPEAN PATENT APPLICATION**

(43) Date of publication:
**25.05.2016 Bulletin 2016/21**

(51) Int Cl.:
***G06T 5/00*** *(2006.01)*

(21) Application number: **14306869.0**

(22) Date of filing: **24.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Hoerentrup, Jobst**
  **30974 Wennigsen (DE)**
• **Schlosser, Markus**
  **76137 Karlsruhe (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for filtering an array of pixels**

(57)     A method and an apparatus (20) for filtering an array of pixels are described. A Domain Transforming unit (23) applies (10) a Domain Transform to the array of pixels to obtain a Domain Transform signal. A weight determining unit (24) determines (11) weights associated with samples of the Domain Transform signal. A filter (25) then filters (12) the Domain Transform signal. The filter (25) takes the determined weights into account during filtering (12).

```
┌─────────────────────────┐
│  Apply Domain Transform │ ⟿ 10
│    to array of pixels   │
└─────────────────────────┘
            │
            ▼
┌─────────────────────────┐
│ Determine weights for   │ ⟿ 11
│ samples of Domain       │
│ Transform signal        │
└─────────────────────────┘
            │
            ▼
┌─────────────────────────┐
│ Filter Domain Transform │ ⟿ 12
│ signal in consideration │
│ of weights              │
└─────────────────────────┘
```

**Fig. 1**

EP 3 023 933 A1

**Description**

**FIELD OF THE INVENTION**

The invention relates to a method and an apparatus for filtering an array of pixels. In particular, the invention relates to a method and an apparatus for filtering an array of pixels with a Domain Transform filter using a normalized convolution or a recursive filter.

**BACKGROUND OF THE INVENTION**

In [1] the so-called Domain Transform is described, which facilitates fast, edge-preserving smoothing of input images. It has been proven to be effective in a wide range of applications, including stylization, recoloring, colorization, detail enhancement, tone mapping, and others. The Domain Transform has several key properties and advantages, of which the main ones are the preservation of fine details in the filter input and its efficiency. Its complexity is $O(n)$, where $n$ denotes the number of pixels in the image. This means that the computational complexity is independent of the chosen kernel size.

The Domain Transform builds upon the observation that a color image can be regarded as a 2D manifold in a 5D space, with two spatial coordinates and three colorimetric coordinates, and that edge-preserving smoothing filtering of the 2D image can therefore be carried out with a 5D spatially-invariant kernel, which has a response that decreases with increasing distance among the pixels in 5D. As the advantage of the spatially-invariant filtering would be lost by the high dimensionality of the necessary kernel, the key idea consists in transforming the problem to a lower-dimensional space while preserving the distances between pixels.

It is known that such a distance-preserving transformation, i.e. an isometry, only exists for very special 2D manifolds in a 5D or any other space. Even then it requires slow optimization methods to find mere approximations. Of course, a very complex transformation would again undo the whole gain of the simpler spatially-invariant filtering. Therefore, the authors propose to approximate the two-dimensional filtering of an image by iteratively applying one-dimensional filters to its rows and columns. As the necessary spatially-invariant 1D smoothing filters can be implemented very efficiently, several such iterations may easily be performed while still being orders of magnitudes faster than the original edge-preserving smoothing filtering.

For any 1D signal it is very simple to define an isometry if only the distance between neighboring samples need to be preserved. This simple transformation can also be implemented very efficiently. The 1D signal is merely warped in such a way that the spacing between adjacent samples is proportional to their colorimetric and spatial distance. Therefore, a color edge in the input signal translates to a larger sample distance in the transformed domain. Later, during filtering of the signal, a larger sample distance either translates to a smaller weight or even pushes a sample out of the filter window. In the latter case its influence on the current sample is eliminated altogether. In effect, this preserves edges during the filtering process, therefore achieving the key goal of the filter.

Currently there are two alternatives available to the Domain Transform. The first is the classical (Joint) Bilateral Filter as described in [2]. Besides potential gradient reversal artifacts, it suffers from computational complexity, especially for larger kernel sizes. Its efficient implementation is currently subject to a lot of research works.

The second alternative to the Domain Transform is the Guided Image Filter as described in [3]. Its main advantages over the (Joint) Bilateral Filter are that it does not suffer from gradient reversal artifacts, and its very efficient implementation. Its complexity is $O(n)$, where $n$ denotes the number of pixels in the image. While the Domain Transform and the Guided Image Filter share this property, their actual filter behavior is different though.

One difference is that the Domain Transform does not assume any linear relationship between the colors of some Guiding Image and the desired filter output. In this sense, it is more general. On the other hand, this linearity assumption leads to the ability of the Guided Image Filter to transfer structures from the Guiding Image to the filter output. This ability currently makes it the best choice for alpha matting. The Domain Transform lacks this capability.

Furthermore, the Domain Transform is reportedly even faster than the Guided Image filter, however it iteratively uses 1-dimensional filters horizontally and vertically in an alternating fashion to approximate the desired 2-dimensional filtering. Although this may be sufficient in most situations, this is may not be good enough for more complex image structures.

In addition, the Domain Transform offers the choice of three different 1-dimensional filters with different filter responses. This offers flexibility, e.g. for filtering with or without edge sharpening.

Overall, the Domain Transform and the Guided Image Filter each have their advantages and disadvantages and the choice of the appropriate filter depends on the application.

In many applications a confidence map accompanies the data to be filtered. A confidence value provides a measure of how reliable an element in the input data is deemed to be. A method that improves the quality of the (Joint) Bilateral's filter output by taking confidence information associated with the filter input into account is disclosed in [4]. In European Patent Application EP13306804.9 a similar method is described for the Guided Image Filter.

## SUMMARY OF THE INVENTION

It is an object to propose an improved solution for filtering an array of pixels with a Domain Transform filter.
According to one embodiment, a method for filtering an array of pixels comprises:

- applying a Domain Transform to the array of pixels to obtain a Domain Transform signal;
- determining weights associated with samples of the Domain Transform signal; and
- filtering the Domain Transform signal taking into account said weights.

Accordingly, a computer readable storage medium has stored therein instructions enabling filtering an array of pixels, which, when executed by a computer, cause the computer to:

- apply a Domain Transform to the array of pixels to obtain a Domain Transform signal;
- determine weights associated with samples of the Domain Transform signal; and
- filter the Domain Transform signal taking into account said weights.

Also, in one embodiment an apparatus configured to filter an array of pixels comprises:

- a Domain Transforming unit configured to apply a Domain Transform to the array of pixels to obtain a Domain Transform signal;
- a weight determining unit configured to determine weights associated with samples of the Domain Transform signal; and
- a filter configured to filter the Domain Transform signal taking into account said weights.

In another embodiment, an apparatus configured to filter an array of pixels comprises a processing device and a memory device having stored therein instructions, which, when executed by the processing device, cause the apparatus to:

- apply a Domain Transform to the array of pixels to obtain a Domain Transform signal;
- determine weights associated with samples of the Domain Transform signal; and
- filter the Domain Transform signal taking into account said weights.

The proposed approach extends the Domain Transform by taking into account additional weights. This Weighted Domain Transform can be used in a broad range of applications. In general, it is useful whenever noisy data that is accompanied by information that allows determining weights is to be smoothed, for example, but not limited to, in alpha matting, disparity estimation, and optical flow estimation. Because of its low computational complexity and its small memory requirements, the described method is well suited for mobile devices and for processing of high-resolution content.
In one embodiment, the weights associated with samples of the Domain Transform signal are determined from confidence values. In many applications a confidence map accompanies the data to be filtered and can be used without additional computationally intensive processing.
In one embodiment, the Domain Transform signal is filtered using a Weighted Normalized Convolution. In this case the confidence values may be directly used as weights. Though this approach already delivers improved results, the necessary computational overhead is rather small. Furthermore, the extension maintains the overall complexity of $O(n)$ of the filter.
In one embodiment, the Domain Transform signal is filtered using a Weighted Recursive Filtering. In this case, the weights associated with samples of the Domain Transform signal are preferably determined by comparing a confidence of a current sample with an average confidence value accumulated so far. This approach delivers further improved results, though with a somewhat higher computational overhead. Nonetheless, the overall complexity of $O(n)$ of the filter is again maintained.
In one embodiment, a filter feedback is increased when the confidence of the current sample is smaller than the average confidence accumulated so far, whereas the filter feedback is reduced when the confidence of the current sample is larger than the average confidence accumulated so far. In other words, when the confidence of the current sample is smaller than the average confidence accumulated so far, the smoothing effect of the filter is strengthened. Vice versa, in case it is larger, the smoothing effect of the filter is attenuated.

**EP 3 023 933 A1**

**BRIEF DESCRIPTION OF THE DRAWINGS**

Fig. 1 schematically illustrates one embodiment of a method for filtering an array of pixels;

Fig. 2 schematically depicts a first embodiment of an apparatus configured to perform the method of Fig. 1;

Fig. 3 schematically illustrates a second embodiment of an apparatus configured to perform the method of Fig. 1;

Fig. 4 compares the quality of different mattes in terms of Sum of Absolute Difference for a standard Normalized Convolution and an extended Normalized Convolution;

Fig. 5 compares the quality of different mattes in terms of Mean Squared Error for the standard Normalized Convolution and the extended Normalized Convolution;

Fig. 6 compares the quality of different mattes in terms of Sum of Absolute Difference for a standard Recursive Filter and an extended Recursive Filter; and

Fig. 7 compares the quality of different mattes in terms of Mean Squared Error for the standard Recursive Filter and the extended Recursive Filter.

**DETAILED DESCRIPTION OF PREFERRED EMBODIMENTS**

For a better understanding the proposed solution shall now be explained in more detail in the following description with reference to the figures. It is understood that the proposed solution is not limited to these exemplary embodiments and that specified features can also expediently be combined and/or modified without departing from the scope of the present invention.

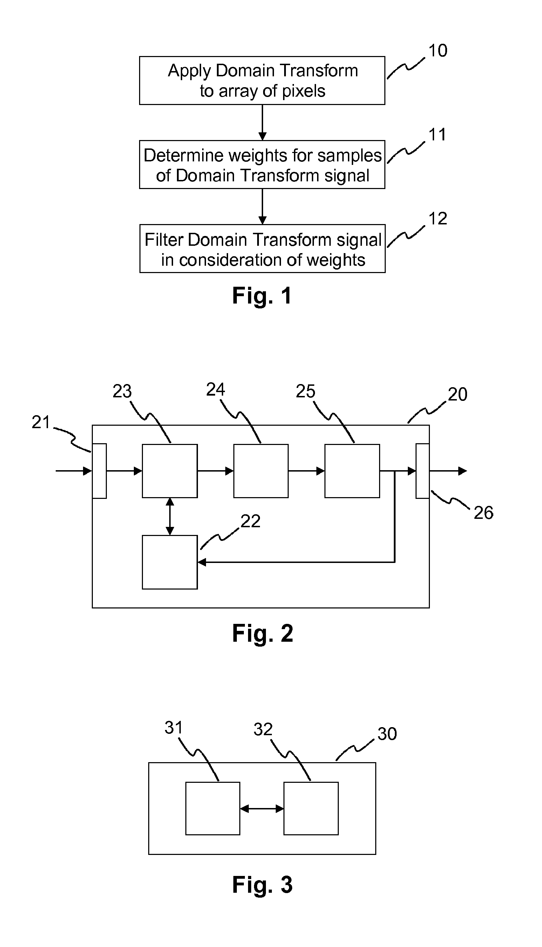

Fig. 1 schematically illustrates one embodiment of a method for filtering an array of pixels. In a first step a Domain Transform is applied 10 to the array of pixels to obtain a Domain Transform signal. Then weights associated with samples of the Domain Transform signal are determined 11. Finally, the Domain Transform signal is filtered 12. During filtering 12 the determined weights are taken into account.

One embodiment of an apparatus 20 configured to perform the method of Fig. 1 is schematically depicted in Fig. 2. The apparatus 20 has an input 21 for receiving an array of pixels, e.g. from a network or an external storage system (not shown). Alternatively, the array of pixels is retrieved from a local storage unit 22. A Domain Transforming unit 23 applies 10 a Domain Transform to the array of pixels to obtain a Domain Transform signal. A weight determining unit 24 then determines 11 weights associated with samples of the Domain Transform signal. The apparatus 20 further comprises a filter 25 for filtering 12 the Domain Transform signal. The filter 25 takes the determined weights into account during filtering 12. The filtered array of pixels and/or intermediate processing results are preferably made available via an output 26. They may likewise be stored on the local storage unit 22. The output 26 may also be combined with the input 21 into a single bidirectional interface. Of course, the different units 23, 24, 25, may likewise be fully or partially combined into a single unit or implemented as software running on a processor.

Another embodiment of an apparatus 30 configured to perform the method of Fig. 1 is schematically illustrated in Fig. 3. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

In the original paper on the Domain Transform [1] three alternative implementations are proposed for filtering the non-uniformly sampled, 1-dimensional signal obtained by the transformation, namely Normalized Convolution, Recursive Filtering, and Interpolated Convolution. According to the present principles, the filtering of the non-uniformly sampled, 1-dimensional signal obtained by the transformation is extended by taking into account additional weights. Details for the implementations using Normalized Convolution and Recursive Filtering shall be described in the following.

The Interpolated Convolution filters the transformed signal by integrating over the area obtained by linearly connecting the non-uniformly spaced samples. As a consequence, every sample affects its two adjacent areas so that it would be rather intricate to introduce a weighting for individual samples. On the other hand, adjacent samples with a large spacing in-between them result in a large area, at least as long as they are within the integration interval, so that they have a big influence on the filter output. This behavior somewhat contradicts the principal idea behind the Domain

4

Transform that a large distance between samples indicates a loose coupling. Therefore, the use of additional weights has not been implemented for this filter.

In one embodiment, additional weights are taken into account during Normalized Convolution of the Domain Transform signal.

In the original version of the filter, the filter output is computed as

$$J(p) = \frac{1}{K_p} \sum_{q \in \Omega} I(q) H\big(t(\hat{p}), t(\hat{q})\big).$$

Here, $p$ denotes the pixel to be filtered, $q$ denotes a pixel in the neighborhood $\Omega$ of $p$, $\hat{p}$ and $\hat{q}$ denote their coordinates in the high dimensional space (one spatial and three colorimetric coordinates in this case), respectively, $t(\hat{x})$ denotes the Domain Transform of $\hat{x}$, $H$ denotes a simple box filter kernel whose coefficients are one for neighbors within the filter radius, and zero otherwise. $I$ denotes the input signal to be filtered, $J$ denotes the filtered signal, and finally $K_p = \Sigma_{q \in \Omega} H(t(\hat{p}), t(\hat{q}))$ is a normalization factor.

According to the proposed extension, the filter output is computed by taking additional weights associated with the filter input into account as follows:

$$\tilde{J}(p) = \frac{1}{\tilde{K}_p} \sum_{q \in \Omega} I(q) w(q) H\big(t(\hat{p}), t(\hat{q})\big).$$

In the above equation $w(q)$ denotes the weight associated with pixel $q$ and $\tilde{K}_p = \Sigma_{q \in \Omega} w(q) H(t(\hat{p}), t(\hat{q}))$ is a modified normalization factor. In this embodiment confidence values are used as the additional weights $w(q)$, which are, for example, received as additional input data.

In another embodiment, additional weights are taken into account during Recursive Filtering of the Domain Transformed signal. In the standard version of the filter, the filter output is computed as

$$J_n = v_n J_{n-1} + (1 - v_n) I_n.$$

Here, $I$ denotes the input signal subject to the filtering, $J$ denotes the filtered signal, $n$ denotes the sample index, and $v_n = a^{d_n} \in [0..1]$ denotes a feedback coefficient. In a recursive filter, the filter output for the current sample $J_n$ is influenced by the filter output for the previous sample $J_{n-1}$. The feedback coefficient $v_n$ controls this influence. $a$ denotes a basic feedback coefficient with $a \in [0..1]$ and $d_n = ct(x_n) - ct(x_{n-1}) > 1$ denotes the distance between the neighboring samples $x_n$ and $x_{n-1}$ in the transformed domain. Therefore, the smaller the distance between neighboring samples, the stronger the filter feedback, and the larger the filter's smoothing effect. Vice versa, the larger the sample distance, the weaker the filter feedback, and the smaller the smoothing effect.

According to the proposed extension, the filter output is computed as:

$$\tilde{J}_n = \frac{1}{K_n} \big(\bar{c}_{n-1} v_n J_{n-1} + c_n (1 - v_n) I_n\big).$$

In this equation $K_n = \bar{c}_{n-1} v n + c_n (1 - v_n)$ is a normalization factor, $c_n$ denotes the confidence value associated with the filtering input $I_n$, and $\bar{c}_{n-1}$ denotes the accumulated average confidence associated with $J_{n-1}$. It is computed by filtering the confidence map by the standard version of the Recursive Filter:

$$\bar{c}_n = v_n \bar{c}_{n-1} + (1 - v_n)c_n.$$

Consequently, the proposed filter adjusts the influence of the filter feedback based on the confidence of the current sample and the average confidence accumulated so far. In case the confidence of the current sample is smaller than the average confidence, the influence of the filter feedback is increased, thus the smoothing effect of the filter is strengthened. Vice versa, in case it is larger, the filter feedback is reduced, thus the smoothing effect of the filter is attenuated.

In case $c_n = \text{const} = \bar{c}_n = c_0$ for all samples $n$, the approach yields the same result as the standard version of the filter:

$$\tilde{J}[n] = \frac{1}{c_0 v_n + c_0(1 - v_n)} [c_0 v_n \tilde{J}_{n-1} + c_0(1 - v_n)I_n]$$

$$= \frac{c_0}{c_0(v_n + (1 - v_n))} [v_n \tilde{J}_{n-1} + (1 - v_n)I_n]$$

$$= [v_n \tilde{J}_{n-1} + (1 - v_n)I_n].$$

In the context of alpha matting, where edge-preserving smoothing filters are often used as a post-processing step for the refinement of an initial (noisy) alpha matte, the preferred filter currently is the Guided Image Filter. Nonetheless, in the following the effectiveness of the proposed extensions for this field of application shall be demonstrated by comparing the results from the standard Domain Transform and the extended version.

For the performance evaluation the challenging alpha matting benchmark training data set from www.alphamatting.com was used, for which ground-truth alpha mattes are available. A Global Matting approach as described in [5] was used to generate the initial alpha mattes. The Global Matting algorithm also computes confidences associated with the alpha values. These were used as the weights for the proposed approaches.

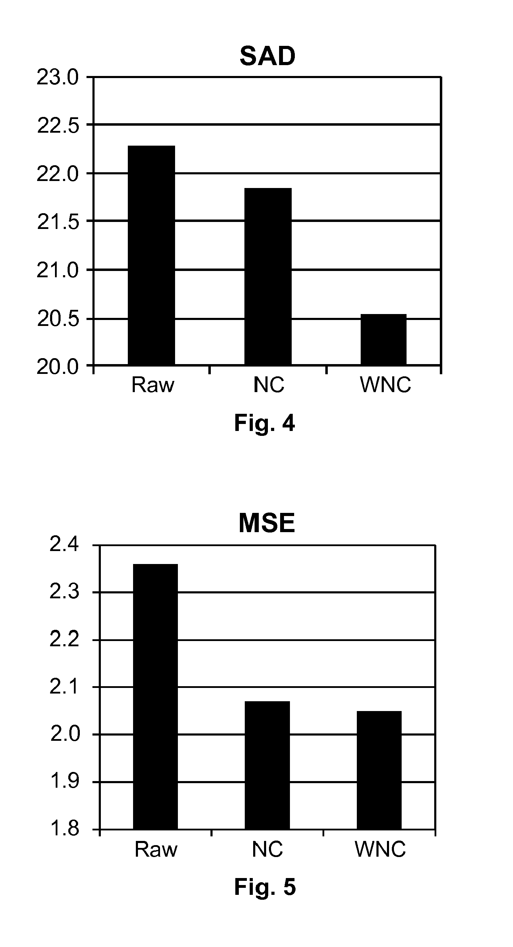

Regarding the performance of the Weighted Normalized Convolution, Fig. 4 compares the quality of the different mattes in terms of Sum of Absolute Difference (SAD), whereas Fig. 5 compares them in terms of Mean Squared Error (MSE). "Raw" refers to the noisy alpha matte as produced by the Global Matting algorithm, which is subject to the filtering, "NC" refers to the standard Normalized Convolution filter of the Domain Transform signal, and "WNC" refers to the proposed Weighted Normalized Convolution filter of the Domain Transform signal. Both error metrics show an improvement of the proposed method over the standard version of the filter. This is especially the case for the Sum of Absolute Difference. Despite the improved results the computational overhead for the proposed approach is just 3%. Furthermore, the extension maintains the overall complexity of $O(n)$ of the filter.

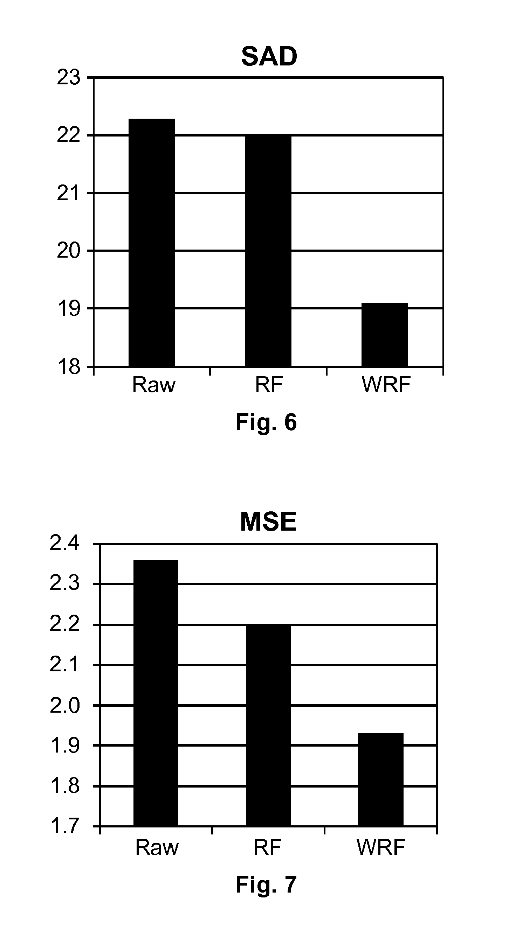

Regarding the performance of the Weighted Recursive Filter, Fig. 6 compares the quality of the different mattes in terms of Sum of Absolute Difference (SAD), whereas Fig. 7 compares them in terms of Mean Squared Error (MSE). As before, "Raw" refers to the noisy alpha matte as produced by the Global Matting algorithm, which is subject to the filtering, whereas "RF" refers to the Domain Transform using the standard Recursive Filter and "WRF" refers to the Domain Transform using the proposed Weighted Recursive Filter. Both error metrics again demonstrate the clear advantage of the proposed method over the original version of the filter. The most expensive operations during the filtering are the computations of the feedback coefficients. They are implemented, for example, by calling a power function for each pixel. The proposed extended filter additionally performs recursive filtering of the confidence map. Fortunately, the necessary feedback coefficients for both filtering operations are the same. As a result the overall computational overhead of the proposed approach is about 25%. Furthermore, the extension maintains the overall complexity of $O(n)$ of the filter.

## Citations

[1] E.S.L. Gastal et al.: "Domain Transform for Edge-Aware Image and Video Processing", ACM Transactions on Graphics - Proceedings of ACM SIGGRAPH 2011, Vol. 30 (2011), pp. 69:1-69:12.

[2] G. Petschnigg et al.: "Digital photography with flash and no-flash image pairs", ACM Transactions on Graphics (TOG) - Proceedings of ACM SIGGRAPH 2004, Vol. 23 (2004), pp. 664-672.

[3] K. He et al.: "Guided Image Filtering", IEEE Transactions on Pattern Analysis and Machine Intelligence, Vol. 35 (2013), pp. 1397-1409.

[4] J. Jachalsky et al.: "Confidence evaluation for robust, fast-converging disparity map refinement", 2010 IEEE International Conference on Multimedia and Expo (ICME), pp. 1399-1404.

[5] K. He et al.: "A Global Sampling Method for Alpha Matting", Proceedings of the 2011 IEEE Conference on Computer Vision and Pattern Recognition (CVPR), pp. 2049-2056.

**Claims**

1. A method for filtering an array of pixels, the method **comprising:**

   - applying (10) a Domain Transform to the array of pixels to obtain a Domain Transform signal;
   - determining (11) weights associated with samples of the Domain Transform signal; and
   - filtering (12) the Domain Transform signal taking into account said weights.

2. The method according to claim 1, **wherein** the weights associated with samples of the Domain Transform signal are determined (11) from confidence values.

3. The method according to claim 1 or 2, **wherein** the Domain Transform signal is filtered (12) using a Weighted Normalized Convolution.

4. The method according to claim 1 or 2, **wherein** the Domain Transform signal is filtered (12) using a Weighted Recursive Filtering.

5. The method according to claim 4, **wherein** for determining (11) the weights associated with samples of the Domain Transform signal a confidence of a current sample is compared with an average confidence accumulated so far.

6. The method according to claim 5, **wherein** a filter feedback is increased when the confidence of the current sample is smaller than the average confidence accumulated so far, whereas the filter feedback is reduced when the confidence of the current sample is larger than the average confidence accumulated so far.

7. A computer readable storage medium having stored therein instructions enabling filtering an array of pixels, which, when executed by a computer, cause the computer to:

   - apply (10) a Domain Transform to the array of pixels to obtain a Domain Transform signal;
   - determine (11) weights associated with samples of the Domain Transform signal; and
   - filter (12) the Domain Transform signal taking into account said weights.

8. An apparatus (20) configured to filter an array of pixels, the apparatus (20) **comprising:**

   - a Domain Transforming unit (23) configured to apply (10) a Domain Transform to the array of pixels to obtain a Domain Transform signal;
   - a weight determining unit (24) configured to determine (11) weights associated with samples of the Domain Transform signal; and
   - a filter (25) configured to filter (12) the Domain Transform signal taking into account said weights.

9. An apparatus (30) configured to filter an array of pixels, the apparatus (30) comprising a processing device (31) and a memory device (32) having stored therein instructions, which, when executed by the processing device (31), cause the apparatus (30) to:

   - apply (10) a Domain Transform to the array of pixels to obtain a Domain Transform signal;
   - determine (11) weights associated with samples of the Domain Transform signal; and

- filter (12) the Domain Transform signal taking into account said weights.

**Fig. 1**

**Fig. 2**

**Fig. 3**

## SAD

```
23.0 ┤
22.5 ┤
22.0 ┤  ███
21.5 ┤  ███        ███
21.0 ┤  ███        ███
20.5 ┤  ███        ███        ███
20.0 ┴──███────────███────────███──
       Raw         NC         WNC
```

**Fig. 4**

## MSE

```
2.4 ┤   ███
2.3 ┤   ███
2.2 ┤   ███
2.1 ┤   ███        ███        ███
2.0 ┤   ███        ███        ███
1.9 ┤   ███        ███        ███
1.8 ┴───███────────███────────███──
        Raw         NC         WNC
```

**Fig. 5**

## SAD

**Fig. 6**

## MSE

**Fig. 7**

Europäisches
Patentamt

European
Patent Office

Office européen
des brevets

# EUROPEAN SEARCH REPORT

**Application Number**

EP 14 30 6869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RZESZUTEK RICHARD ET AL: "Label propagation through edge-preserving filters", 2014 IEEE INTERNATIONAL CONFERENCE ON ACOUSTICS, SPEECH AND SIGNAL PROCESSING (ICASSP), IEEE, 4 May 2014 (2014-05-04), pages 599-603, XP032616931, DOI: 10.1109/ICASSP.2014.6853666 [retrieved on 2014-07-11] | 1-4,7-9 | INV. G06T5/00 |
| A | * abstract * * sections 2, 3 * | 5,6 | |
| X | PHAN RAYMOND ET AL: "Edge-aware temporally consistent SimpleFlow: Optical flow without global optimization", 2013 18TH INTERNATIONAL CONFERENCE ON DIGITAL SIGNAL PROCESSING (DSP), IEEE, 1 July 2013 (2013-07-01), pages 1-6, XP032498545, ISSN: 1546-1874, DOI: 10.1109/ICDSP.2013.6622827 [retrieved on 2013-10-06] | 1-3,7-9 | |
| A | * abstract * * sections II, III * | 4-6 | **TECHNICAL FIELDS SEARCHED (IPC)**<br><br>G06T |
| X | RZESZUTEK RICHARD ET AL: "Efficient automatic depth estimation for video", 2013 18TH INTERNATIONAL CONFERENCE ON DIGITAL SIGNAL PROCESSING (DSP), IEEE, 1 July 2013 (2013-07-01), pages 1-6, XP032498544, ISSN: 1546-1874, DOI: 10.1109/ICDSP.2013.6622807 [retrieved on 2013-10-06] | 1,2,4, 7-9 | |
| A | * abstract * * section II * | 3,5,6 | |

-/--

The present search report has been drawn up for all claims

| Place of search | Date of completion of the search | Examiner |
|---|---|---|
| Munich | 23 March 2015 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 30 6869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EDUARDO S. L. GASTAL ET AL: "Domain transform for edge-aware image and video processing", ACM TRANSACTIONS ON GRAPHICS, vol. 30, no. 4, 1 July 2011 (2011-07-01), page 1, XP055176069, ISSN: 0730-0301, DOI: 10.1145/2010324.1964964 * the whole document * | 1-9 | |
| A | ANTONIS KATARTZIS ET AL: "Robust Bayesian Estimation and Normalized Convolution for Super-resolution Image Reconstruction", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1 June 2007 (2007-06-01), pages 1-7, XP031114659, ISBN: 978-1-4244-1179-5 * section 3.4 * | 3 | |
| A | YANG QINGXIONG: "Hardware-Efficient Bilateral Filtering for Stereo Matching", IEEE TRANSACTIONS ON PATTERN ANALYSIS AND MACHINE INTELLIGENCE, IEEE COMPUTER SOCIETY, USA, vol. 36, no. 5, 1 May 2014 (2014-05-01), pages 1026-1032, XP011546869, ISSN: 0162-8828, DOI: 10.1109/TPAMI.2013.186 [retrieved on 2014-05-01] * section 2 * | 3 | |

TECHNICAL FIELDS
SEARCHED (IPC)

-/--

The present search report has been drawn up for all claims

| Place of search | Date of completion of the search | Examiner |
|---|---|---|
| Munich | 23 March 2015 | Katartzis, Antonios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 14 30 6869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN SHEN ET AL: "Weighted Bilateral Filter A new image filter for noise removing and detail information preserving", GLOBAL HIGH TECH CONGRESS ON ELECTRONICS (GHTCE), 2012 IEEE, IEEE, 18 November 2012 (2012-11-18), pages 1-5, XP032352158, DOI: 10.1109/GHTCE.2012.6490113 ISBN: 978-1-4673-5086-0 * section II * | 3 | |
| A | DANIEL DONATSCH ET AL: "Hand-held 3D light field photography and applications", THE VISUAL COMPUTER, vol. 30, no. 6-8, 15 May 2014 (2014-05-15), pages 897-907, XP055176425, ISSN: 0178-2789, DOI: 10.1007/s00371-014-0979-5 * section 4.2 * | 1-9 | |

TECHNICAL FIELDS
SEARCHED (IPC)

The present search report has been drawn up for all claims

| Place of search | Date of completion of the search | Examiner |
|---|---|---|
| Munich | 23 March 2015 | Katartzis, Antonios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13306804 A

**Non-patent literature cited in the description**

- **E.S.L. GASTAL et al.** Domain Transform for Edge-Aware Image and Video Processing. *ACM Transactions on Graphics - Proceedings of ACM SIGGRAPH 2011,* 2011, vol. 30, 1-69
- **G. PETSCHNIGG et al.** Digital photography with flash and no-flash image pairs. *ACM Transactions on Graphics (TOG) - Proceedings of ACM SIGGRAPH 2004,* 2004, vol. 23, 664-672
- **K. HE et al.** Guided Image Filtering. *IEEE Transactions on Pattern Analysis and Machine Intelligence,* 2013, vol. 35, 1397-1409
- **J. JACHALSKY et al.** Confidence evaluation for robust, fast-converging disparity map refinement. *2010 IEEE International Conference on Multimedia and Expo (ICME),* 2010, 1399-1404
- **K. HE et al.** A Global Sampling Method for Alpha Matting. *Proceedings of the 2011 IEEE Conference on Computer Vision and Pattern Recognition (CVPR),* 2011, 2049-2056